# DEMANDE DE BREVET EUROPEEN

(11) **EP 4 787 673 A1**
(43) Date de publication de la demande: **05.08.2026**
(21) Numéro de dépôt: 26154510.7
(22) Date de dépôt: 27.01.2026
(51) Int. Cl.: H02K 1/2753, H02K 7/106, H02K 11/215

(54) **MACHINE ÉLECTRIQUE TOURNANTE SYNCHRONE À ROTOR MULTIFONCTION**

(30) Priorité: 30.01.2025 FR 2500941
(71) Demandeur: BHG, 68100 Mulhouse (FR)
(72) Inventeur: GIORDANO, Nicolas, 92700 COLOMBES (FR); DELPY, Vincent, 68510 SIERENTZ (FR); FRITSCH, Thomas, 67800 HOENHEIM (FR)
(74) Mandataire: Cabinet Bleger-Rhein-Poupon

(57) **Abrégé**

Machine électrique tournante synchrone autopilotée comportant un stator (10) muni de bobines, un rotor (1) solidarisé à un arbre central (2) et dont la périphérie est équipée d'aimants permanents (3) ou de segments aimantés, et une unité de commande pilotant des moyens d'alimentation triphasée des bobines statoriques et des moyens de détection (40) de la position du rotor (1). Les aimants permanents (3) ou les segments aimantés dépassent du rotor (1), dans une direction axiale, à chaque extrémité axiale du rotor (1), constituant deux couronnes magnétiques annulaires d'extrémité (30, 30').

La machine électrique tournante comporte un anneau magnétique (20) fixe solidarisé à un carter de la machine tournante et divisé en secteurs angulaires, chaque secteur étant magnétisé et présentant une polarisation différente des secteurs adjacents, ledit anneau magnétique (20) étant orienté perpendiculairement à l'axe de rotation du rotor (1) et fixé de sorte que les secteurs angulaires soient positionnés en face de l'une des couronnes magnétiques d'extrémité (30') du rotor (1), dont il est séparé par un entrefer e.

## Description

La présente invention a trait à une machine électrique tournante synchrone autopilotée, par exemple un moteur sans balais (brushless), qui comporte communément un stator et un rotor muni d'aimants permanents périphériques. L'ensemble stator/rotor est en général logé dans un carter qui l'enveloppe et permet au moins une liaison mécanique d'un arbre tournant du rotor avec une charge mécanique placée à l'extérieur du carter.

Le stator est classiquement muni de bobines générant des champs magnétiques d'amplitudes et de phases variables, qui sont fonctions de l'alimentation en courant de chaque bobine. Cette alimentation en courant est de fait asservie à la position des aimants permanents du rotor, des moyens de détection donnant à chaque instant la position angulaire du rotor, qui détermine ensuite la phase à donner aux champs magnétiques statoriques par les courants d'alimentation. En substance, on surveille la position des aimants permanents pour commuter le courant et mettre sous tension les bobines du stator au bon moment. Compte tenu de l'importance de phaser correctement les signaux d'alimentation, on comprend que la fonction détection de la position du rotor est primordiale pour ce type de machines tournantes.

Le fonctionnement est en général triphasé, et les moyens d'alimentation sont par conséquent reliés à trois bobinages comportant chacun au moins une bobine (par exemple trois bobines par bobinage). Les bobines du stator sont en fait alimentées de manière à créer en permanence, sur la périphérie du rotor, des champs magnétiques déphasés par rapport aux champs magnétiques rotoriques (en quadrature). Ces derniers cherchant à s'aligner à chaque instant avec les champs magnétiques statoriques tournants, le rotor est entraîné en rotation. La modulation de l'intensité des courants d'alimentation permet la gestion de la vitesse et du couple moteur. La commande s'effectue par des moyens de commande électronique qui pilotent principalement d'une part les signaux en retour des moyens de détection de la position du rotor et d'autre part la forme et l'intensité des courants d'alimentation des bobines du stator.

Une application préférentielle des moteurs synchrones autopilotés selon l'invention est la motorisation de volets roulants. Dans cet environnement, un des objectifs de fonctionnement vise à permettre une gestion du freinage, jusqu'à assurer une immobilisation stable de l'arbre moteur. Pour ce type de moteur, un freinage naturel résulte notamment du couple de détente, lorsque les bobines statoriques cessent d'être alimentées, et également de l'inertie mécanique du moteur et des composants qui y sont associés (réducteur...). Pour augmenter l'efficacité du freinage, les bobines statoriques peuvent de plus être mises en court-circuit. En cas de glissement, on limite en effet la descente de la charge, en l'occurrence le tablier du volet roulant, en court-circuitant les bobinages de manière à créer une force contre-électromotrice FCEM.

Pour obtenir un blocage stable de l'arbre moteur, il faut cependant ajouter un dispositif complémentaire de stabilisation. Une solution faisant l'objet du document EP 3 121 942 a déjà été proposée par le présent déposant. Elle est basée sur un dispositif spécifique comportant des aimants permanents équipant d'une part une paroi périphérique interne d'un capot prévu pour fermer le carter enfermant l'ensemble stator/rotor, et d'autre part une paroi périphérique externe radiale d'un disque fixé à un arbre du rotor. Ce dispositif de freinage, qui fonctionne de manière radiale, se trouve dès lors placé un peu à l'écart du moteur proprement dit, dans un prolongement axial du carter.

Une autre solution relève du document EP 3 890 165, qui décrit un rotor dont une portion d'extrémité axiale dépasse du stator et est entourée d'une bague de freinage qui est située dans la prolongation du stator. Le rotor est divisé en deux partie, une partie qui est qualifiée de « zone moteur » entourée par le stator et une partie qualifiée de « zone de freinage » qui est entourée par la bague de freinage. Il s'agit à nouveau d'un fonctionnement électromagnétique radial. Cette solution présente l'inconvénient d'augmenter sensiblement l'encombrement du moteur, puisque la partie freinage augmente d'à peu près un tiers la longueur totale du moteur, ce qui n'est pas négligeable dans de nombreux environnements.

Pour le type d'application envisagée, visant à la motorisation de volets roulants, deux fonctions essentielles doivent de fait être optimisée par la machine électrique tournante synchrone autopilotée : d'une part assurer la meilleure détection possible de la position instantanée du rotor, pour un fonctionnement fluide du moteur d'entraînement du volet, et d'autre part réaliser la meilleure gestion possible du freinage, incluant l'immobilisation stable du moteur, pour stopper le déplacement du volet et le stabiliser en toute position voulue par l'utilisateur.

L'invention propose par conséquent une configuration particulière de machine électrique tournante autopilotée, qui permet une gestion optimale de ces deux fonctions sans obérer par ailleurs le fonctionnement normal du moteur.

A ces effets, la machine électrique tournante synchrone autopilotée de l'invention, comportant classiquement un stator muni de bobines, un rotor solidarisé à un arbre central et dont la périphérie est équipée d'aimants permanents ou de segments aimantés et une unité de commande pilotant des moyens d'alimentation triphasée des bobines statoriques et des moyens de détection de la position du rotor, est telle que les aimants permanents ou les segments aimantés dépassent du rotor, dans une direction axiale, à chaque extrémité axiale du rotor, constituant deux couronnes magnétiques annulaires d'extrémité générant un évidement annulaire entre l'intérieur des extrémités dépassantes des aimants ou des segments aimantés et la périphérie de l'arbre central.

C'est donc principalement le rotor qui est modifié dans la configuration particulière mise en avant par l'invention. Le rotor présente des aimants permanents ou des segments aimantés périphériques qui se prolongent en une portion d'extrémité qui n'est pas reliée, radialement, à l'arbre central. Par segments aimantés, on entend des volumes similaires ou identiques à ceux des aimants permanents, qui ne sont pas distincts du rotor mais sont des portions du rotor magnétisées pour alterner les positionnements des pôles N et des pôles S. Lorsqu'on parle d'aimants ou de segments aimantés périphériques, cela signifie que la périphérie cylindrique du rotor est équipée d'aimants permanents ou de segments aimantés : on entend par là que la surface délimitant radialement le cylindre formant le rotor est équipée d'aimants permanents ou de segments aimantés, à la manière de tuiles périphérique s'étendant, dans une direction axiale, sur la longueur du rotor, les tuiles étant accolées ou proches les unes des autres dans une direction parallèle à l'axe du rotor. Géométriquement, on peut encore exprimer cela en précisant que les aimants permanents ou les segments aimantées équipent une surface périphérique définie par les génératrices du cylindre rotorique. Dans une orientation radiale, perpendiculaire à l'axe de rotation, les aimants permanents ou les segments aimantés ont une profondeur qui est telle qu'ils n'occupent en réalité que la périphérie du rotor, sur quelques mm en direction de l'arbre rotatif.

Du fait de la configuration propre à l'invention, aux extrémités du rotor, seule la couche périphérique correspondant audits aimants permanents ou aux segments aimantés subsiste, sur l'ensemble de ladite périphérie, constituant dès lors une couronne magnétisée avec des secteurs angulaires de pôles alternativement Nord N et Sud S entourant un évidement annulaire. Cette configuration possible très spécifique à double dépassement axial (aux deux extrémités axiales) des aimants permanents du rotor peut présenter, comme on le verra plus en détail dans la suite, des avantages de construction, notamment liés aux fonctions de détection et de freinage/immobilisation appliquées au rotor.

Pour exploiter au mieux les potentialités de cette structure, selon l'invention, la machine tournante de l'invention comporte, en plus du dépassement aux deux extrémités axiales par les aimants permanents périphériques, un anneau magnétique fixe solidarisé à un carter de la machine tournante et divisé en secteurs angulaires, chaque secteur étant magnétisé et présentant une polarisation différente des secteurs adjacents, ledit anneau magnétique étant orienté perpendiculairement à l'axe de rotation du rotor et fixé de sorte que les secteurs angulaires soient positionnés en face de l'une des couronnes magnétiques d'extrémité du rotor dont il est séparé par un entrefer e.

Par secteur angulaire, on entend une zone délimitée par une portion du cercle extérieur constituant le chant périphérique de l'anneau, deux segments de droites concourant en le centre dudit cercle extérieur et définissant l'angle du secteur angulaire et une portion du cercle intérieur de l'anneau délimité par ces deux droites. A noter que ledit cercle intérieur est de diamètre supérieur à celui de l'arbre du rotor.

Grâce à la configuration propre à l'invention, un système d'aide au freinage assurant une immobilisation stable du rotor plus simple et plus efficace que celui dont on a fait état ci-dessus peut être mis en oeuvre. Il n'est plus nécessaire de recourir à deux éléments aimantés propres à cette fonction et situés en regard pour constituer le dispositif auxiliaire de freinage/blocage, à l'extérieur ou dans le prolongement du carter du moteur. Un simple anneau à secteurs magnétiques polarisés suffit, la configuration axialement proéminente des aimants permanents ou des segments aimantés, du côté de l'anneau magnétique, facilitant la coopération magnétique entre les secteurs aimantés de l'anneau et les aimants permanents ou les segments aimantés du rotor. En l'absence du caractère protubérant des aimants ou des segments aimantés rotoriques, ou s'il est insuffisant, le stator a tendance à faire boucler le champ magnétique du rotor, et le freinage est globalement inefficient. L'entrefer e est par ailleurs maintenu le plus réduit possible, en fonction de la configuration de la machine tournante, pour améliorer l'efficacité du dispositif.

Le stator peut présenter une dimension axiale de l'ordre de celle du rotor sans les couronnes d'extrémités, qui dépassent alors également axialement dudit stator. En partant d'une structure traditionnelle très usuelle dans laquelle le stator et le rotor équipé des aimants permanents présentent une homogénéité dimensionnelle dans la direction de l'axe de rotation, les couronnes magnétiques d'extrémité peuvent être - dans l'invention - rallongées de chaque côté de sorte qu'elles dépassent des surfaces frontales (orientées radialement) du stator, le dépassement ayant lieu dans une direction axiale.

Le nombre de secteurs angulaires de l'anneau magnétique est égal au nombre d'aimants permanents ou de segments aimantés au niveau de la couronne magnétique annulaire. Si le nombre de pôles magnétiques périphériques successifs est égal à n, le rotor peut atteindre n/2 positions stables, en substance toutes les positions dans lesquelles un pôle N ou S de l'un du rotor ou de l'anneau fait face à un pôle respectivement S ou N de l'autre.

De préférence, les secteurs angulaires de l'anneau magnétique peuvent présenter une dimension radiale supérieure à l'épaisseur radiale de la couronne magnétique annulaire. Ils présentent par ailleurs, entre eux, une géométrie identique. En substance, les secteurs annulaires de l'anneau sont placés en face, et présentent le même dimensionnement angulaire que les segments angulaires constituées par les faces frontales - situées dans un plan perpendiculaire à l'axe de rotation du rotor - des aimants permanents ou des segments aimantés de la couronne magnétique d'extrémité.

Selon l'invention, les segments aimantés du rotor peuvent être réalisés par surmoulage de plasto-ferrite entourant l'arbre central du rotor. Ou par surmoulage de plasto-ferrite sur une autre partie du rotor également obtenu par surmoulage entourant l'arbre central du rotor. Pour améliorer la sensibilité du freinage au niveau de l'entrefer, les secteurs magnétisés de l'anneau magnétique peuvent être en matériau magnétique présentant une aimantation supérieure à la plasto-ferrite, par exemple du type Samarium (SnCo), ou plasto-néodyme (NbFeB) ou encore néodyme (NbFeB). Ils peuvent cependant également être en plasto-ferrite, à la condition de diminuer l'entrefer e, diminution qui devient alors plus contraignante. Cela fonctionne en effet aussi avec de la plasto-ferrite, si l'entrefer e est très réduit.

On a mentionné auparavant l'existence d'un freinage naturel lorsque les bobines statoriques cessent d'être alimentées, résultant en particulier d'un couple de détente. On a également précisé que le freinage est amélioré par mise en court-circuit des bobines statoriques pour chaque phase. A cet égard, selon une configuration possible de l'invention, les moyens d'alimentation triphasée des bobines statoriques peuvent comporter des moyens de commutation en court-circuit d'au moins les bobines d'une phase.

Dans la structure de la machine tournante propre à l'invention, pour tirer le meilleur parti de la configuration spécifique du rotor, les moyens de détection de la position du rotor sont placés en face de la couronne magnétique annulaire d'extrémité opposée à celle qui fait face à l'anneau magnétique. Cette fonction de surveillance de la position des aimants permanents ou des segments aimantés du rotor pour mettre sous tension les bobines du stator au bon moment est primordiale pour phaser correctement les signaux d'alimentation, et le caractère protubérant des aimants permanents ou des segments aimantés permet d'optimiser la détection, la rendant très performante. De préférence, ces moyens de détection peuvent consister en au moins un capteur à effet Hall.

D'autres buts et avantages de la présente invention apparaîtront au cours de la description qui va suivre, laquelle présente un mode préférentiel de réalisation de l'invention. Celui-ci n'est cependant donné qu'à titre d'exemple indicatif et non limitatif.

La compréhension de cette description sera facilitée en se référant aux dessins joints en annexe et dans lesquels :
[Fig.1] représente une vue schématique d'une section longitudinale d'une machine tournante selon l'invention, avec un rotor doté de la configuration caractéristique de l'invention, un anneau de freinage/immobilisation et des moyens de détection de la position rotorique ; et
[Fig.2] montre de manière schématisée un anneau de freinage/blocage utilisé dans le cadre de l'invention.

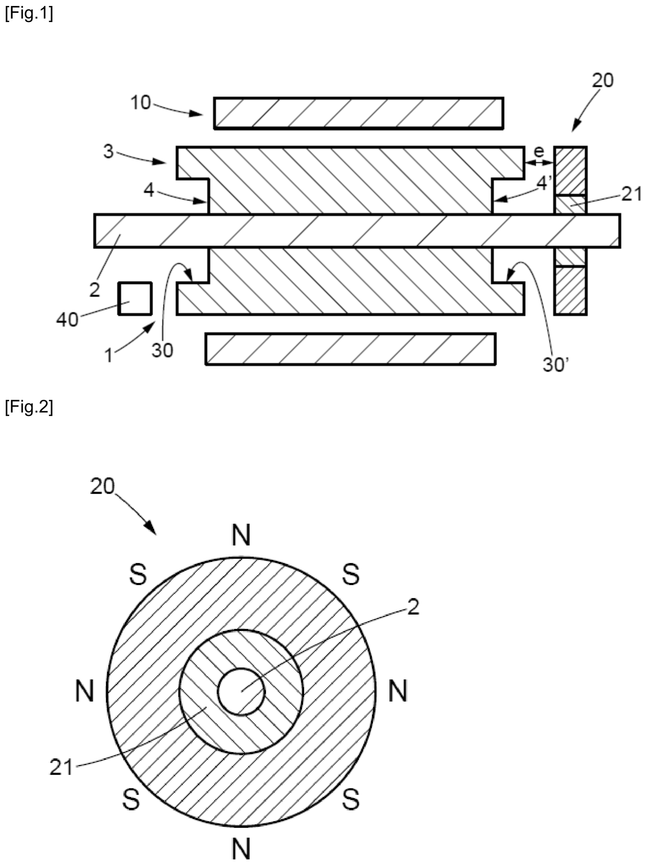

En référence à la figure 1, le rotor (1) placé à l'intérieur d'un stator classique (10) comporte classiquement un arbre central (2) et des aimants périphériques (3) ou des segments aimantés. Lesdits segments aimantés peuvent être obtenus par des surmoulages de plasto-ferrite de compositions adaptées, réalisés sur l'arbre (2) du rotor (1) ou sur une portion cylindrique du rotor (1) surmoulée sur ledit arbre (2). Les aimants permanents (3) peuvent alors de préférence prendre la forme de portions de couronne à la périphérie du rotor (1). Les pôles des aimants (3) adjacents sont successivement inversés. Lesdits aimants permanents (3) ou les segments aimantés recouvrent la totalité ou la quasi-totalité de la périphérie du rotor (1) (ils peuvent être positionnés parallèlement de telle sorte que leurs côtés axiaux ne soient pas en contact). Ils présentent à chaque extrémité axiale du rotor (1), dans la configuration de l'invention, une portion terminale qui dépasse axialement du rotor (1) et du stator (10), ces portions terminales formant ensemble et de chaque côté du rotor (1) une couronne magnétique d'extrémité (30, 30'), créant de chaque côté un évidement (4, 4') annulaire situé entre chaque couronne (30, 30') et l'arbre (2).

Les couronnes (30, 30') constituent de fait des excroissances axiales de la périphérie du rotor (1), aimantée en pôles périphériques successivement opposés par les aimants permanents (3). Ces couronnes (30, 30') du rotor (1) ouvrent des potentialités supplémentaires visant à mettre en œuvre des fonctions qui vont au-delà de sa fonction initiale de simple rotor (1) d'une machine électrique tournante. Un rotor simple classique, dépourvu des caractéristiques propres à la présente invention, met en œuvre un fonctionnement qui potentialise plutôt sur les orientations d'allure radiale des champs magnétiques créés par les aimants permanents (3) ou les segments aimantés, en vue de mettre en place les conditions de la rotation du rotor (1) dans le stator (10) générant un champ magnétique tournant. A présent, la nouvelle configuration de l'invention introduit et incite à une utilisation plus axiale des champs magnétiques, c'est-à-dire qui potentialise aussi sur les orientations d'allure axiale des lignes de champs. L'allongement axial des aimants permanents (3) ou des segments aimantés permet en fait l'établissement d'autres circuits magnétiques efficients, que ne permettent pas les configurations connues dans lesquelles le stator et le rotor présentent une dimension axiale sensiblement équivalente, avec des aimants permanents (3) qui ne dépassent pas du rotor (1).

Ainsi, pour réaliser une fonction de freinage/blocage efficace, cette configuration rend possible de n'utiliser qu'un simple anneau (20) dont la périphérie comporte des secteurs angulaires magnétisés successivement en pôles Nord (N) et Sud (S), comme cela est visible en figure 2, ledit anneau magnétisé (20) étant séparé de la couronne magnétique d'extrémité (30') par un entrefer e de faible dimension (pour des raisons d'efficacité, il faut que l'entrefer soit le plus réduit possible). Le caractère protubérant de la couronne magnétique (30') entourant l'évidement (4') à cette extrémité permet un bouclage des lignes de champ magnétique entre les extrémités axiales magnétisées des aimants permanents (3) ou des segments aimantés et les secteurs angulaires magnétisés de l'anneau (20) qui leur font face. Les aimants permanents (3) ou les segments aimantés offrent des extrémités magnétisées respectivement N et S (elles se succèdent) de la même manière que les secteurs angulaires de l'anneau (20), avec le même nombre n de pôles de part et d'autre de l'entrefer e. L'immobilisation stable se fait alors selon une de n/2 positions.

L'anneau magnétique (20) de freinage de l'invention est relié à l'arbre rotatif (2) via un palier (21) ou équivalent, sachant qu'il doit être immobilisé, et donc relié fixement - directement ou indirectement - à une structure mécanique de type carter (non représentée) auquel est également relié de manière fixe le stator (10). Cet anneau (20) est situé dans le prolongement immédiat du rotor (1), dans une direction axiale, et c'est donc une première fonction magnétique « axiale » qui est mise en œuvre de manière optimale grâce à la configuration spécifique du rotor (1) de l'invention, combinée avec l'anneau magnétique (20) à secteurs angulaires magnétisés. Après la fonction primaire du rotor, dont la magnétisation d'allure radiale permet la rotation du fait du champ magnétique tournant généré par le stator (10), c'est la seconde fonction permise par ladite configuration.

L'existence, dans la configuration de l'invention, d'une couronne magnétique d'extrémité (30) à l'opposé de celle qui fait face à l'anneau (20), permet de mettre en œuvre de façon optimisée une deuxième fonction magnétique « axiale », à savoir la fonction de détection de la position du rotor (1). Comme évoqué, les moyens de détection de la position rotorique sont des moyens de détection des changements de polarité des aimants permanents (3) ou des segments aimantés périphériques du rotor (1) et consistent en au moins un capteur de position (40) (par exemple de type capteur à effet Hall) apte à détecter chaque changement de polarité magnétique des aimants permanents (3) ou des segments aimantés périphériques du rotor (1), au cours de la rotation de ce dernier.

Le ou les capteurs (40) devant de préférence être placés très près du rotor (1), ils sont positionnés, dans une direction radiale, au niveau et en face des aimants permanents (3) ou des segments aimantés périphériques du rotor (1), comme cela apparaît en figure 1. Selon la configuration de l'invention, la détection est encore optimisée en ce que lesdits aimants permanents (3) ou les segments aimantés dépassent du rotor (1) dans la direction axiale, formant une couronne magnétique d'extrémité (30) - entourant l'évidement (4) annulaire - en direction du capteur (40) des moyens de détection. Cette configuration rend non nécessaire l'utilisation d'une ou plusieurs pièces polarisées supplémentaires, les ferrites existantes des aimants permanents (3) ou des segments aimantés, rallongées selon l'invention pour mieux coopérer avec le ou les capteurs (40), étant bien suffisantes. Le rapprochement qui en résulte, entre les pôles magnétiques des aimants permanents (3) ou des segments aimantés de la couronne magnétique (30) et le ou les capteurs (40), améliore très sensiblement la qualité de la détection, qui devient très efficace, permettant la mise en œuvre d'une commutation électronique garante d'une bonne commande et d'une alimentation des bobines du stator (10) optimalement phasée en courant.

Cette fonction détection est en réalité une deuxième fonction magnétique « axiale » qui est mise en oeuvre grâce à la configuration spécifique du rotor (1) de l'invention. Après la fonction magnétique primaire d'entraînement du rotor, puis la fonction freinage/immobilisation, c'est la troisième fonction magnétique permise par ladite configuration.

Par conséquent, la structure de la présente invention permet la mise en œuvre d'un rotor (1) triple fonction, lesdites fonctions étant largement optimisée par la forme particulière donnée au rotor (1).

Les modalités de conception illustrées par les figures en l'espèce très schématiques ne sont bien entendu pas exhaustives de l'invention, qui englobe au contraire des variantes de forme notamment susceptible d'affecter la structure intégrant l'anneau ou le détecteur de position, dont la conception n'est pas montrée avec précision dans les figures.

## Revendications

1. Machine électrique tournante synchrone autopilotée comportant un stator (10) muni de bobines, un rotor (1) solidarisé à un arbre central (2) et dont la périphérie est équipée d'aimants permanents (3) ou de segments aimantés, et une unité de commande pilotant des moyens d'alimentation triphasée des bobines statoriques et des moyens de détection (40) de la position du rotor (1), **caractérisée en ce que** les aimants permanents (3) ou les segments aimantés dépassent du rotor (1), dans une direction axiale, à chaque extrémité axiale du rotor (1), constituant deux couronnes magnétiques annulaires d'extrémité (30, 30') générant un évidement annulaire entre l'intérieur des extrémités dépassantes des aimants (3) ou des segments aimantés et la périphérie de l'arbre central (2), et en que la machine électrique tournante comporte un anneau magnétique (20) fixe solidarisé à un carter de la machine tournante et divisé en secteurs angulaires, chaque secteur étant magnétisé et présentant une polarisation différente des secteurs adjacents, ledit anneau magnétique (20) étant orienté perpendiculairement à l'axe de rotation du rotor (1) et fixé de sorte que les secteurs angulaires soient positionnés en face de l'une des couronnes magnétiques d'extrémité (30') du rotor (1), dont il est séparé par un entrefer e.

2. Machine électrique tournante synchrone autopilotée selon la revendication précédente, **caractérisée en ce que** le nombre de secteurs angulaires de l'anneau (20) est égal au nombre d'aimants permanents ou de segments aimantés au niveau de la couronne magnétique annulaire (30').

3. Machine électrique tournante synchrone autopilotée selon l'une des revendications précédentes, **caractérisée en ce que** les secteurs angulaires de l'anneau magnétique (20) présentent une dimension radiale supérieure à l'épaisseur radiale de la couronne magnétique annulaire (30').

4. Machine électrique tournante synchrone autopilotée selon l'une des revendications précédentes, caractérisée en que les segments aimantés du rotor (1) sont réalisés par surmoulage de plasto-ferrite entourant l'arbre central (2) du rotor (1).

5. Machine électrique tournante synchrone autopilotée selon l'une des revendications précédentes, caractérisée en que les secteurs magnétisés de l'anneau magnétique (20) sont en matériau magnétique du type Samarium (SnCo), ou plasto-néodyme (NbFeB) ou encore néodyme (NbFeB) ou en plasto-ferrite.

6. Machine électrique tournante synchrone autopilotée selon l'une des revendications précédentes, caractérisée en que les moyens d'alimentation triphasée des bobines statoriques comportent des moyens de commutation en court-circuit d'au moins les bobines d'une phase.

7. Machine électrique tournante synchrone autopilotée selon l'une des revendications précédentes, caractérisée en que les moyens de détection (40) de la position du rotor sont placés en face de la couronne magnétique annulaire d'extrémité (30) opposée à celle qui fait face à l'anneau magnétique (20).

8. Machine électrique tournante synchrone autopilotée selon la revendication précédente, **caractérisée en ce que** les moyens de détection (40) consistent en au moins un capteur à effet Hall.
